# EUROPEAN PATENT APPLICATION

(11) **EP 2 161 713 A1**
(43) Date of publication of application: **10.03.2010**
(21) Application number: 08163722.5
(22) Date of filing: 05.09.2008
(51) Int. Cl.: G09G 5/399, G09G 5/00, G09G 3/20, H04N 7/26, H04N 7/36

(54) **Display system with partial updating**

(71) Applicant: Telefonaktiebolaget LM Ericsson (publ), 164 83 Stockholm (SE)
(72) Inventor: Walleij, Linus, 224 79 Lund (SE)
(74) Representative: Boesen, Johnny Peder

(57) **Abstract**

A display controller (203) for providing display data to a display system (201) is described. The display data comprises rows and columns of picture elements, each picture element having a value. The display controller (203) comprises a first frame buffer (217), a second frame buffer (219) and control circuitry (215,223) configured to provide a partial update of a display screen (207), where only a well-defined rectangle, defined by the two coordinate pairs of its upper left corner and its lower right corner, on the display screen (207) is updated. That is, only a rectangle comprising changed picture elements from a first frame to a second frame is updated. By transmitting only bad rectangles to the display system (201), it is possible to improve the average performance by a large factor. Although a worst case will still be a complete update of the whole display screen (207), the size of the average updating data stream will be much smaller, giving vastly improved frame rate as well as an improved power saving as compared to prior art solutions.

## Description

### Technical field

The present invention relates to updating display data in a display system.

### Background

In many embedded systems including devices such as mobile communication terminals, graphics are produced on color liquid crystal displays, LCD's. These displays are autonomous systems, typically comprising an inherent controller in the form of a small microprocessor. The content, in the form of the visible picture elements, of the display is updated through a serial or parallel channel, by a leading update command from a display controller followed by a stream of data to be displayed on the display screen. In the following, an LCD display screen and its inherent controller will be denoted the LCD display system (or display system for short) and a display controller is the hardware device or subsystem communicating with the LCD display system over a stream channel.

The system user of the display controller is a software procedure running on a microprocessor, a hardware image generator or anything similar that want to display successive frames of graphics data on the display. A definition of a frame will be discussed in some more detail below. An example of the resolution and bit depth of a display is the QVGA (Quarter VGA) screen at 320 x 240 picture elements (pixels) and a typical color bit depth for each pixel of maximum 24 bits (RGB 888).

Whenever the display screen of a display system is to be updated with changes in graphics content relevant for an interactive viewer (i.e. a person looking at the display screen), the system user draws a frame. The rate at which such updates occur is denoted the frame rate. That is, the frame rate is defined as the number of times per second the system user can send a new frame to the display system. The frame rate is a measure expressed as an average rate over a specific time interval. It is an imperative of all designers of interactive systems such as games to obtain a high frame rate. In numerous benchmarks of products like graphic controller cards, this is regarded the most important feature, more or less a measure of the responsiveness of the system.

The data to be displayed by the display system is stored in a memory area as a consecutive number of bits, e.g. 24 bits, of data per pixel from coordinate (0, 0) until (319, 239) in the case of QVGA, advancing one pixel per 24 bit group and moving down to the next y-axis line when the end of a line is reached. For example, a transition from coordinate (319, 0) to (0, 1) in QVGA is an advance by 24 bits of consecutive memory positions. This consecutive memory area is usually stored in random access memory (RAM) and is typically referred to as a frame buffer.

Update commands can be a complete update, where the entire area of the display is updated with a stream of bytes corresponding to the number of pixels on the screen multiplied by the bit depth, so for a screen of 320 x 240 and a bit depth of 24 bits this is a continuous stream of 320 x 240 - 24 = 1843200 bits (230400 bytes), directed to subsequent pixels starting at coordinate (0, 0) on the screen and advancing forward pixel by pixel each 3rd byte, moving one line down with each 320th pixel, until it reaches pixel (319, 239) and the entire screen is refreshed. With a bit rate of 100Mbps on the channel connecting the display controller and the LCD system this will take 1843200/100000000 ms, i.e. about 18.4 ms. This corresponds to a frame rate of about 54 frames per second (fps).

Sending a complete image to the display is the only way a traditional cathode ray tube (CRT) display can be updated, due to physical constraints in CRT systems. However autonomous LCD display systems are different and typically support commands for partial updates of its content. For example, US patent application publication 2002/0140685 A1 addresses the problem of increasing frame rate and saving power in a display control apparatus by providing partial update of image data in a frame buffer. The frame rate increases and power is saved by only transmitting a subset of lines of image data from the display control apparatus to a display panel. However, US 2002/0140685 A1 has a drawback in that all updates of the display panel need to be complete lines of image data.

### Summary

In order to improve on prior art solutions there is provided, according to a first aspect, a display controller for providing display data to a display system. The display data comprises rows and columns of picture elements, each picture element having a value. The display controller comprises a first frame buffer, a second frame buffer and control circuitry configured to receive a first frame of display data, store said first frame of display data in the first frame buffer, and configured to iterate the following: receive a current frame of display data, store the current frame of display data in the second frame buffer, compare values of corresponding picture elements in said first frame buffer and said second frame buffer, the comparison providing indicators of row and column positions representing at least one rectangular area within which area at least one picture element value differs between the first frame buffer and the second frame buffer, provide the positions of the at least one rectangular area and the corresponding picture element values of the second frame buffer to the display system, and assign the display data in the second frame buffer to the first frame buffer.

In other words, the drawbacks as discussed above are addressed by providing partial update, where only a well-defined rectangle, defined by the two coordinate pairs of its upper left corner and its lower right corner, on the display screen is updated. That is, only a rectangle (below referred to as a bad rectangle) comprising changed picture elements from a first frame to a second frame is updated. By transmitting only bad rectangles from the frame buffer memory to the display system, it is possible to improve the average performance by a large factor. Although a worst case will still be a complete update from (0, 0) to (xmax, ymax), i.e. a whole display screen, the size of the average updating data stream will be much smaller, giving vastly improved frame rate as well as an improved power saving as compared to prior art solutions.

Embodiments of the display controller may be configured to compare values of corresponding picture elements in the first frame buffer and the second frame buffer by traversing each frame buffer yielding a row array and a column array of logical values that indicate whether or not any one or more picture element value differs between the first frame buffer and the second frame buffer at any position along each row and along each column, respectively, and identify positions of corners of the at least one rectangular area by traversing the row array and traversing the column array and during the traversing check whether or not the logical values of the arrays both indicate a picture element value that differs in respective row or column between the first frame buffer and the second frame buffer, yielding coordinate pairs that represent the at least one rectangular area.

In other words, bad rectangles may be identified by the use of two arrays of logical values, one array representing the presence of bad columns and one array representing the presence of bad lines. The identification of the rectangles is performed through a combination of the two arrays, noting that the values of the arrays are interpreted as being representative of the projections of the rectangles, i.e. the sides of the rectangles, on the direction of the lines and the direction of the columns, respectively. Needless to say, the traversing of the row array and the column array may be performed in any order. That is, the row array may be traversed and for each value of the row array the column array is traversed, or vice versa.

Such embodiments may be configured to compare and traverse involving applying hysteresis such that positions of differing picture element values along a row or column are separated by at least a predetermined hysteresis distance.

That is, during the traversing and comparison, by applying a hysteresis distance it is possible to obtain the advantageous effect of avoiding identification of a large number of very small rectangles.

Embodiments of the display controller may be configured to identify, by traversing the rows and columns corresponding to a rectangular area in the first and second frame buffer, any rectangular area not differing in any picture element position and, depending on the identification, discard the row and column positions corresponding to the rectangular area not differing in any position.

In such embodiments, any identified rectangles that do not comprise any picture element value that differs between the first frame buffer and the second frame buffer can be discarded and thereby it is possible to avoid unnecessary updating of such rectangles.

In a second aspect, there is provided a method in a display controller for providing display data to a display system as summarized above. The method comprises receiving a first frame of display data, storing said first frame of display data in the first frame buffer, and iterating receiving a current frame of display data, storing the current frame of display data in the second frame buffer, comparing values of corresponding picture elements in said first frame buffer and said second frame buffer, the comparison providing indicators of row and column positions representing at least one rectangular area within which area at least one picture element value differs between the first frame buffer and the second frame buffer, providing the positions of the at least one rectangular area and the corresponding picture element values of the second frame buffer to the display system, and assigning the display data in the second frame buffer to the first frame buffer.

The apparatus according to the first aspect may, according to a third aspect, be comprised in a mobile communication device, and a computer program according to a fourth aspect may comprise software instructions that, when executed in a computer, performs the method according to the first aspect. These further aspects provide corresponding effects and advantages as discussed above in connection with the first aspect.

### Brief description of the drawings

Embodiments will now be described with reference to the attached drawings, where:
figure 1 is a functional block diagram that schematically illustrates mobile communication device,
figure 2 is a functional block diagram that schematically illustrates a display system and a display controller,
figure 3 is a functional block diagram that schematically illustrates a display controller,
figure 4 schematically illustrates content of a frame buffer,
figures 5a-c schematically illustrate identification of rectangles in a frame buffer, and
figure 6 is a flow chart of a method in a display controller.

### Detailed description of embodiments

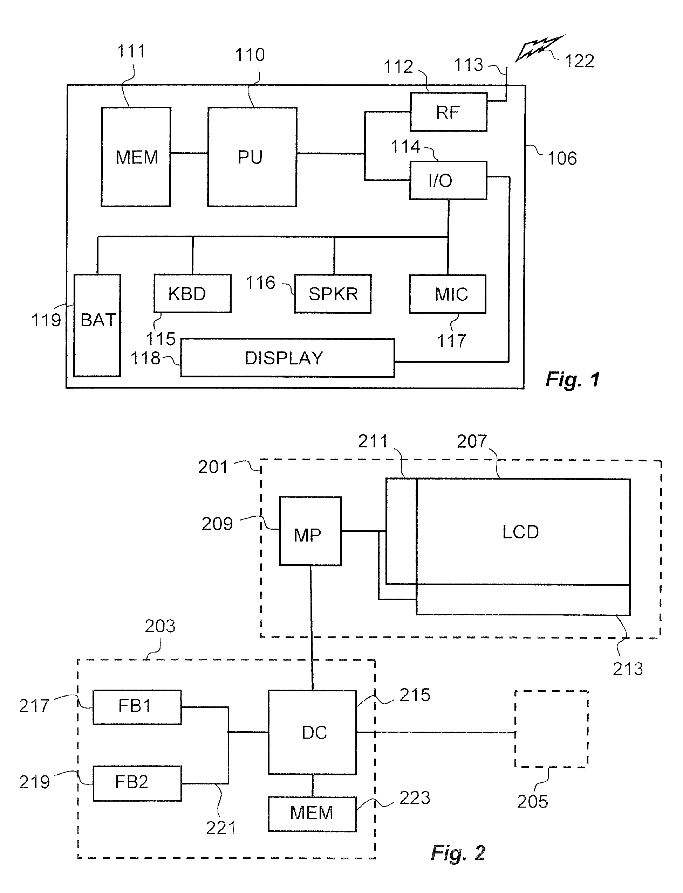

Figure 1 illustrates schematically an arrangement in which a display controller as summarized above may be realized. The arrangement is in figure 1 exemplified by a mobile communication device 106, e.g. a mobile phone. The communication device 106 comprises a processor 110, memory 111, a battery 119 as well as input/output units in the form of a microphone 117, a speaker 116, a display 118 and a keypad 115 connected to the processor 110 and memory 111 via an input/output interface unit 114. Radio communication via an air interface 122 is realized by radio circuitry (RF) 112 and an antenna 113. The processor 110 makes use of software instructions stored in the memory 111 in order to control, in conjunction with logic circuitry incorporated in the processor 110 as well as in other parts of the device 106, all functions of the device 106. The battery 119 provides electric power to all other units that reside in the mobile communication device 106. Details regarding how these units operate in order to perform normal functions within a mobile communication network are known to the skilled person and are therefore not discussed further. Moreover, the illustration of a mobile communication device is not to be interpreted as limiting. That is, realization of the display control summarized above is only one example and it is foreseen that it is useful in any device that has display and processing capabilities and where frame updating is an issue.

Figure 2 is a functional block diagram that illustrates a display system 201 connected to a display controller 203. The display system 201 may be arranged in a device such as the communication device 106 described above in connection with figure 1, and as such be comprised in the display 118 (figure 1). However, the display system 201 may also form part of any other device in which a display system is present.

The display system 201 comprises a display screen 207, which in this example is a liquid crystal display (LCD) screen with associated row circuitry 211 and column circuitry 213 connected to a microprocessor 209. The microprocessor 209 receives graphics data from a display controller 203 and controls the row and column circuitry 211,213 in such a manner that the display screen displays graphics corresponding to the received graphics data from the display controller 203. The details regarding how the microprocessor 209 and the row and column circuitry 211 interact is known to the skilled person and will therefore not be described further.

The display controller 203 comprises control circuitry 215, memory circuitry 223, a first frame buffer 217 and a second frame buffer 219. The control circuitry 215 and the frame buffers 217,219 are connected with a data bus and an address bus, illustrated with connection 221. At least the frame buffers 217, 219 are realized in fast action memory circuitry and, as the skilled person will realize, both frame buffers 217,219 may also be realized in conjunction with the memory circuitry 223 in a single memory unit or in a dedicated circuit together with the control circuitry 215, remembering that figure 2 is a functional block diagram and not a circuit diagram.

Graphics data is supplied to the display controller 203 from a graphics data provider, which in figure 2 is illustrated with a dashed box 205. As the skilled person will realize, the graphics data provider may be in the form of circuitry and/or software process (cf. the discussion regarding system user above) in any type of processing or communication device, e.g. a mobile phone. In fact the graphics data provider dashed box 205 may be the device 106 of figure 1 (excluding the display unit 118).

By utilizing fast frame buffer memory to hold a frame of graphics data to be displayed, it is possible to obtain control over address lines of the address bus 221 to swap content of the frame buffers 217,219 with the use of hardware circuitry. From a perspective of the graphics data provider 205 the process of updating comprises an iteration of:
- Request access to a frame buffer memory.
- Receive access to a frame buffer memory.
- Populate frame buffer memory with graphics data.
- Request update of the frame buffer memory to the LCD display system.

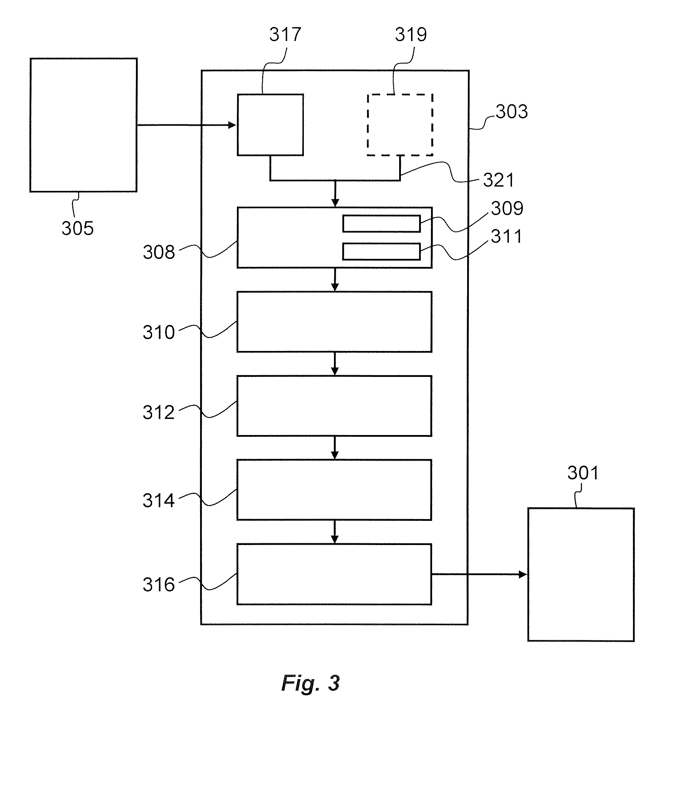

This will be illustrated in more detail in the following with reference to figures 3 to 6. Figure 3 is a functional block diagram of a display controller 303 that is connected to a graphics data provider 305 and a display system 301. Needless to say, the display controller 303 of figure 3 may correspond to the display controller 203 of figure 2.

The display controller 303 comprises a first frame buffer memory 317 and a second frame buffer memory 319. In the following, the first frame buffer 317 will be referred to as a frame buffer that holds graphics data of a current graphics data frame (in short: a current frame fₙ) and the second frame buffer 319 will be referred to as a frame buffer that holds graphics data of a previous graphics data frame (in short: a previous frame fₙ₋₁).

The copy of the previous frame buffer 319 is done by simply keeping it private to the display controller 303. The graphics data provider 305 does not own the frame buffer 319 after requesting an update. That is, the graphics data provider 305 is not allowed to address the frame buffer memory 319 any more after requesting an update, it may only store pixel color values in the frame buffer 317 between the point it receives, i.e. is assigned, the frame buffer 317 and the point where it requests an update. If the graphics data provider 305 wants to keep a copy of the frame buffer 317 for some reason, the graphics data provider 305 has to store this copy by itself.

As mentioned above, the process of updating comprises a sequence in which the display controller 303 is inactive until the graphics data provider 305 has populated a current frame fₙ by storing graphics data in the frame buffer memory 317 that the provider 305 received access to from the display controller 303 and requests an update.

When the request for an update occurs, the display controller 303 compares the current frame, in the first frame buffer 317 with the previous frame fₙ₋₁ in the second frame buffer 319. This is performed by circuitry designated as a bad row and column detector 308, which compares fₙ with fₙ₋₁ and feeds the results to a bad side identifier 310 that analyzes information on bad rows and columns, resulting bad sides that are fed to a bad rectangle identifier 312, which combines the bad sides into bad rectangles and, optionally, feeds them to a shadow rectangle eliminator 314 and from there to a bad rectangle stream generator 316 that provides information regarding the bad rectangles to the display system 301. Of course, not only "meta-information" such as coordinates are provided to the display system, but also picture element data is provided.

The frame buffers 317,319 and the bad row and column detector 308, the bad side identifier 310, the bad rectangle identifier 312, the shadow rectangle eliminator 314 as well as the bad rectangle stream generator 316 are interconnected via a data and address bus schematically illustrated by connection 321.

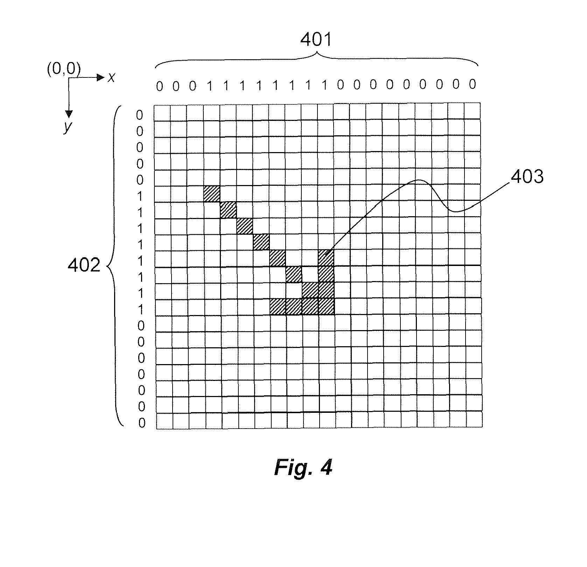

Turning now to figure 4, and with continued reference to figure 3, the function of the bad column and line detector 308 will be described in more detail. In figure 4 a number of picture elements (pixels), one of which is identified by reference numeral 403, are highlighted to indicate that the value of these pixels have changed between frames.

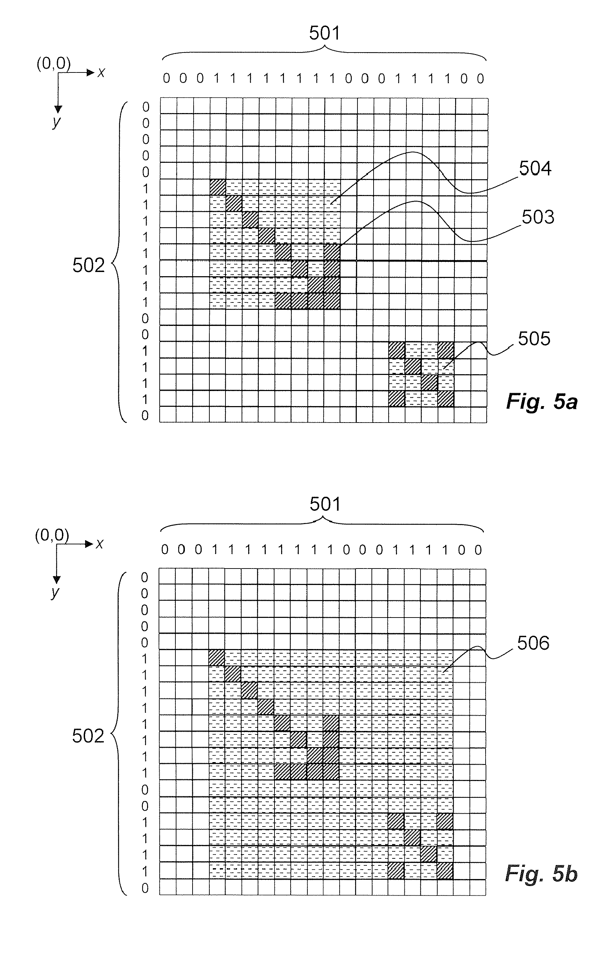

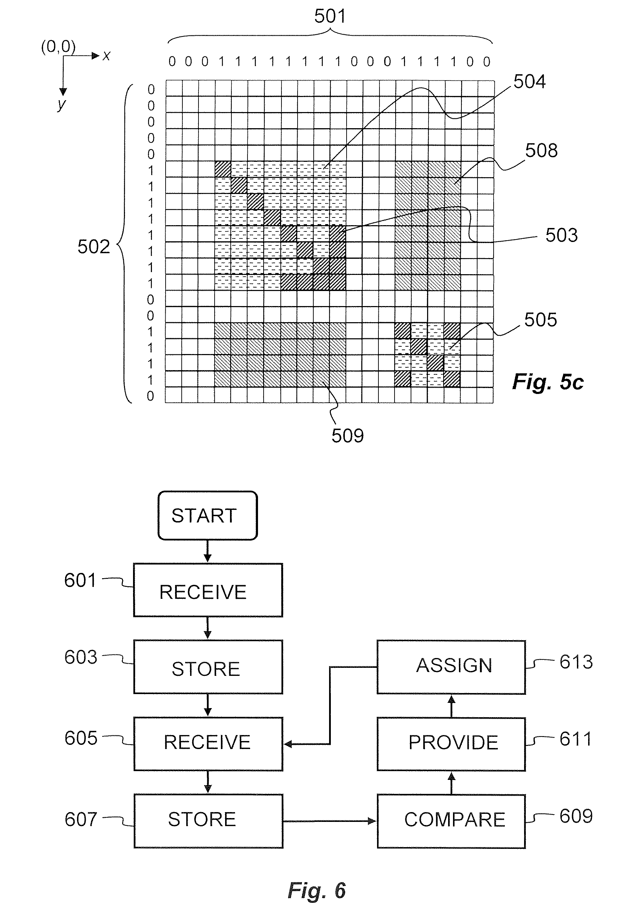

The detector 308 is configured such that it is capable of reserving two registers (i.e. arrays of bits) with the same bit width as the spatial resolution of the display screen of the display system 301. These registers are denoted the *xbad* register 401 and the *ybad* register 402. These registers are initially set to all zero. For a screen of QVGA resolution 320 x 240 the *xbad* register 401 is 320 bits wide and the *ybad* register 402 is 240 bits wide, for example. In figure 4 (and in figure 5), both the *xbad* register 401 and the *ybad* register 402 is only 20 bits wide in order to enhance clarity of the illustrations.

The bits *xbad₀..xbadₘₐₓ* and the bits *ybad₀..ybadₘₐₓ* represent bad columns and bad lines respectively, so that if content differs between frame fₙ and frame fₙ₋₁ in column *i* then *xbadᵢ* will be set to 1, else *xbadᵢ* will be 0 and, conversely, if content differs between frame fₙ and frame fₙ₋₁ in line *j* then *ybadⱼ* will be set to 1, else *ybadⱼ* will be 0.

The setting of each bit in accordance with the actual badness-state of respective column and line is performed by a hardware comparator 309 in the detector 308, which compares the bits of any two pixels, one pixel from frame fₙ and one pixel from frame fₙ₋₁ and return 1 if they are different. For example, if 24 bit color depth is used, the comparator 309 will compare 24 bits of the two frame buffers at a time.

The hardware comparator 309 is connected to the data lines of the bus 321 of the frame buffer memories of fₙ and fₙ₋₁, i.e. the buffers 317, 319. Addressing logic 311 is used in the detector 308 that is configured to increase the address into the frame buffer by one pixel to the right or down, to the comparator. For example the addressing logic 311 advances 24 bits at a time in the *x* direction and 24 bits times the line length (in pixels) bits in the *y* direction for each step, if the color bit depth is 24 bits.

The addressing logic 311 traverses either across one line at a time, or down one column at a time. It is to be noted that to investigate a column, traversing across lines (downward) is performed and in order to investigate lines, traversing across columns (to the right) is performed.

Whenever the comparator 309 indicates that the column *i* or line *j* is bad by returning a 1 as output, the corresponding column or line is marked as bad in *xbadᵢ* or *ybadⱼ* respectively, then traversing is terminated in the addressing logic 311 and the comparator 309 and addressing logic 311 begin to work on next column or line.

If the addressing logic 311, during traversing, reaches the end of a certain column *i* or line *j* without the comparator 309 ever returning 1, it is regarded not bad, and the 0 is retained in *xbadᵢ* or *ybadⱼ* respectively. *i* or *j* is then respectively advanced by one and moves to the next column or line.

The comparisons are terminated when the last column or line is reached. *xbad* and *ybad* will now hold a bit pattern indicating if something changed on that column or line (1), or whether they are unchanged (0).

If increased speed of the comparisons is desired, it is possible to configure the detector 308 with several comparators and addressing logic units working in parallel to complete the task faster. In such a configuration the frame buffer memories are designed, e.g. in the form of high speed circuits, such that several comparators can read pixel values from it at the same time, i.e. configured with multiple read ports.

Typically, the detector 308 is configured with at least two comparators 309 and two addressing units 311 addressing a double-ported memory 317,319, so that the hardware is capable of independently examine columns and lines at the same time. The task at hand is massively parallelizable by sub-dividing the *x* and/or *y* axis in intervals to be processed by each comparator, addressing logic and memory port triplet.

The registers, comparators and addressing units mentioned above can be modified for any resolution and color registers depth by simply scaling the respective parameter up or down. For example, a 1024 x 768 screen of 8 bits per pixel color depth will use *xbad* and *ybad* of 1024 and 768 bits, respectively, comparators of 8 bits and addressing logic that advance 8 bits at a time in the *x* direction and 8 * 1024 bits at a time in the *y* direction.

By designing frame buffer memories, registers, comparators and addressing units to a certain maximum resolution and pixel color bit depth, hardware can be constructed to scale down to any lower resolution and color bit depth by just setting new values to address counters inside the addressing logic, disabling bits of the comparator by feeding it identical values for unused bits, and so on.

The *xbad* and *ybad* registers are then provided to the bad side identifier 310. With *xbad* and *ybad* as input, the bad side identifier 310 creates a list of bad sides for the *x* and *y* axis. This is performed by initializing two counters named *i* and *j* to 0. The counters should be wide enough to hold the *x* and *y* resolution of the display screen in absolute values (0..*xmax*) and (0..*ymax*), respectively.

*xbad* is then traversed using counter *i* until a column *x₀* is reached that indicates bad (i.e. a value of 1). If *xmax* is reached during this initial traversing operation it can be concluded that, since there are no bad columns, no pixels have changed between frames fₙ₋₁ and fₙ and the two frames are identical. The bad lines in *ybad* will all be 0 too in such a case.

Traversing of *xbad* is continued to identify a bad side. This will be the upper side of a bad rectangle.

Whenever *xbad* indicates a non-bad column (i.e. a value of 0), hysteresis is activated. The meaning of hysteresis is that a few columns have to be non-bad before a bad line is terminated. The hysteresis is resolution-dependent and can be adjusted for different scenarios. A typical value for the hysteresis is 2 to 5 pixels. When the hysteresis indicates *xhyst* non-bad columns following the last bad column, or *xmax* is reached during the traversing, *x₁* is set to the last indicated bad column, and a bad side (*x₀, x₁*) has been identified.

A certain amount of hysteresis is typically needed in order to avoid cases like, for a 20 x 20 frame buffer, *xbad* = {01010101010101010101}. Without using hysteresis this would otherwise result in 10 individual 1-pixel wide bad sides, each prefixed with its own partial update command. If this was later permuted (see below) with e.g. *ybad* = {01010101010101010101}, 100 single-pixel bad rectangles would result (in a worst case), which is not acceptable.

The *xbad* register continues to be searched, traversing with counter *i*, for further bad sides beginning at *x₁* + *xhyst,* in order to identify subsequent bad sides beyond the one that is being processed. If a second, third, fourth etc. bad side is found, these are stored as the bad sides (x₂, x₃), (x₄, x₅), (x₆, x₇) etc. At the end of this operation, a list of bad sides for this frame buffer has been obtained.

In parallel with searching for bad sides on the x axis using counter *i* to traverse *xbad,* a counter *j* is used to do the same searching for bad sides on the *y* axis using *ybad.* This is done exactly as described for the *x* axis. (If only one counter is used, it is possible to do this in sequence instead). This will result in another list of bad sides for the *y* axis, (y₀, y₁), (y₂, y₃), (y₄, y₅) etc.

This is illustrated in figure 5a, where *xbad* is illustrated by reference numeral 501 and *ybad* is illustrated by reference numeral 502. The dark grey pixels, one of which is referenced by 503, are pixels that have been found to be bad, and the light grey areas 504 and 505 indicate bad rectangles, with their respective bad sides 501, 502 marked along the edges. The example in figure 5a uses a hysteresis value of 0 for both x and y axes. That is, in the example of figure 5a there are two distinct bad sides for both the x axis and the *y* axis: (*x₀, x₁*) = (3, 10), (*x₂, x₃*) = (14, 17), (*y₀*, *y₁*) = (5, 12), (*y*₂, *y₃*) = (15, 18).

If instead a hysteresis of 4 is used for both the *x* axis and the *y* axis, the bad sides will join, resulting in a single rectangle 506 as illustrated in figure 5b. In figure 5b, the sides of the only bad rectangle are (*x₀, x₁*) = (3,17) and (*y₀, y₁*) = (5,18).

One way of storing, in memory circuitry, the bad sides in the *x* and *y* axis is to reserve two tuple arrays, one for each axis, with a size determined by the maximum possible number of bad sides for each axis, which is in turn determined by the resolution of the frames and of the hysteresis values.

When the two distinct sets of tuples for the bad sides (the set of bad sides on the *x* axis and the *y* axis respectively) have been obtained as described above, all sides along the *x* axis are permuted in the bad rectangle identifier 312 with all sides along the *y* axis, resulting in a set of bad rectangles. The resulting number of rectangles will be equal to the number of bad sides on the *x* axis multiplied by the number of bad sides on the *y* axis.

For example if the bad sides are (*x₀, x₁*), and (*x₂*, *x₃*) on the *x* axis, and (*y₀, y₁*), and (*y₂*, *y₃*) on the *y* axis, the bad rectangles are {(*x₀*, *y₀*), (*x₁, _{y1}*)} {( *x₀, y₂*), (*x₁, y₃*)}, {( *x_{2,} y₀*), (*x₃, y₁*)} and {( *x₂*, *y₂*), (x*₃*, *y₃*)}. This identification can be done in hardware by (as in this example) permuting, i.e. looping over the bad sides on the *x* axis and for each such bad side, run an inner loop that combines it with each bad side on the *y* axis. If bad sides are stored in two arrays, this is as simple as using two counters *i* and *j* where *i* loops over the *x* array and *j* is an inner loop over the *y* array. The result is a number of bad rectangles.

The resulting bad rectangles may be stored in hardware using a quadruple stack (i.e. four values for each entry identifying each bad rectangle), so that the stack can be processed by the subsequent steps.

It is to be noted that for this example, if a hysteresis of 0 is used, a number of "shadow" rectangles are also identified in the process described above. These "shadow" rectangles are illustrated in figure 5c by reference numerals 508 and 509. This phenomenon will occur on any screen of a sufficient size with more than one bad rectangle identified in the permutation described above.

The shadow rectangles 508, 509 can be ignored (which is of course easiest), resulting in a few unnecessary updates. If there are *n* true bad rectangles places at a distance along a diagonal (as in the example of figure 5a-c), a maximum number of *n²-n* unnecessary rectangles will result. This is trivial mathematics and follows from the quadratic form of the display. As in the example of figure 5, 2 * 2 - 2 = 2 shadow rectangles are obtained, and as figure 5c illustrates, indeed there are two shadow rectangles.

If the shadow rectangles are ignored, the value of the hysteresis should be adjusted upwards to avoid them as much as possible, or there will likely be many unnecessary rectangle updates.

If desired, the number of bad rectangles can be reduced, in the shadow rectangle eliminator 314, by re-use of the comparator 309 and addressing logic 311 from the bad column and line detector 308. That is, for each bad rectangle, the comparator is run over the successive pixels, line by line or column by column, until it either outputs a 1 or reaches the last pixel. Whenever the comparator outputs 1, it is a true bad rectangle and the rectangle is kept, and if the last pixel is reached, it is a shadow rectangle and it is discarded.

The bad rectangle stream generator 316 is then used. Generating a partial display update for a certain bad rectangle basically involves creating a data stream with some prefix, catenated with a pixel color data stream and terminated with a postfix. Typically the prefix will contain some magic "partial update command" bits, start *x* and *y* coordinate, end *x* and *y* coordinate, and from this the display system will calculate the expected length of the stream to follow. The postfix will mostly be empty or another set of magic bytes recognized by the display, for example a unique stream termination sequence.

Several consecutive partial update streams are generated by catenating the start (*x, y*) and end (*x*, *y*) coordinates with the stream of pixel color data from the bad rectangle.

The coordinate quadruples {(*x₀, y₀*), (*x₁, y₁*)} are obtained that define each bad rectangle. Each rectangle is then sent as a stream to the display system by:
- sending any magic prefix,
- sending (*x₀, y₀*) and (*x₁*, *y₁*) in the format desired by the display system,
- initializing a set of addressing logic and counters that can address subsequent pixels from frame *fₙ*, beginning at (*x₀*, *y₀*) and moving one pixel to the right, i.e. (*x₀+1, y₀*)*,* (*x₀+2, y₀*) etc until it reaches (*x₁, y₀*), then wrapping around to (*x₀, y₀+1*) and so forth until it reaches (*x₁, y₁*), picking out the corresponding pixel color bits from frame buffer *fₙ* and transmit these to the display system, and
- sending any magic postfix.

Of course, instead of supplying data per row, it is also possible to supply the picture elements per column, i.e. moving one pixel down at the time. Moreover, it is also possible to supply the pixels from the lower right corner (x₁,y₁) up to (x₀,y₀) moving upwards by row or column.

When all quadruples are processed, the bad rectangle stream generator 316 terminates, and the current frame buffer *fₙ* is switched to be the shadow frame buffer *fₙ₋₁*, and the old shadow frame buffer is made available to the graphics data provider as *fₙ* the next time a graphics data provider wants to draw in the frame buffer. In practice, if only two buffers are used in this scheme, the graphics data provider will, for example, get two different frame buffer base addresses alternating back and forth in the role of *fₙ*.

It is to be noted that the shadow rectangle eliminator 314 can be pipelined with the bad rectangle stream generator 316, so that whenever a rectangle is determined to be genuine (i.e. not a shadow rectangle) it is passed immediately to the stream generator 316 before the shadow rectangle eliminator 314 tries to verify the next bad rectangle to be genuinely bad.

Although the processing described above is performed by dedicated hardware, it is possible to realize the processing by way of a number of method steps performed by software instructions executing in an appropriately configured display controller, for example the controller 215 in figure 2. Such a method comprises the following steps, as illustrated in a flow chart in figure 6.

In a reception step 601 a first frame of display data is received from a graphics data provider. In a storage step 603, the first frame of display data is stored in a first frame buffer. Then, the following steps are iterated: a reception step 605 wherein a current frame of display data is received, a storage step 607 wherein the received current frame of display data is stored in a second frame buffer, a comparison step 609 wherein values of corresponding picture elements in said first frame buffer and said second frame buffer are compared, the comparison providing indicators of row and column positions representing at least one rectangular area within which area at least one picture element value differs between the first frame buffer and the second frame buffer, a provision step 611 wherein the positions of the at least one rectangular area and the corresponding picture element values of the second frame buffer are provided to the display system, and an assignment step 613 wherein the display data in the second frame buffer is assigned to the first frame buffer.

## Claims

1. A display controller for providing display data to a display system, said display data comprising rows and columns of picture elements, each picture element having a value, the display controller comprising a first frame buffer, a second frame buffer and control circuitry configured to:
- receive a first frame of display data,
- store said first frame of display data in the first frame buffer, and to iterate:
- receive a current frame of display data,
- store the current frame of display data in the second frame buffer,
- compare values of corresponding picture elements in said first frame buffer and said second frame buffer, the comparison providing indicators of row and column positions representing at least one rectangular area within which area at least one picture element value differs between the first frame buffer and the second frame buffer,
- provide the positions of the at least one rectangular area and the corresponding picture element values of the second frame buffer to the display system, and
- assign the display data in the second frame buffer to the first frame buffer.

2. The display controller of claim 1 configured to:
- compare values of corresponding picture elements in said first frame buffer and said second frame buffer by traversing each frame buffer yielding a row array and a column array of logical values that indicate whether or not any one or more picture element value differs between the first frame buffer and the second frame buffer at any position along each row and along each column, respectively, and
- identify positions of corners of the at least one rectangular area by traversing the row array and traversing the column array, and during the traversing:
- check whether or not the logical values of the arrays both indicate a picture element value that differs in respective row or column between the first frame buffer and the second frame buffer, yielding coordinate pairs that represent the at least one rectangular area.

3. The display controller of claim 2 configured to:
- compare and traverse involving applying hysteresis such that positions of differing picture element values along a row or column are separated by at least a predetermined hysteresis distance.

4. The display controller of any of claims 1 to 3 configured to:
- identify, by traversing the rows and columns corresponding to a rectangular area in the first and second frame buffer, any rectangular area not differing in any picture element position and, depending on the identification, discard the row and column positions corresponding to the rectangular area not differing in any position.

5. A communication terminal comprising a display system and the display controller as claimed in any of claims 1 to 4.

6. A method in a display controller for providing display data to a display system, said display data comprising rows and columns of picture elements, each picture element having a value, the display controller comprising a first frame buffer, a second frame buffer and control circuitry, the method comprising:
- receiving a first frame of display data,
- storing said first frame of display data in the first frame buffer, and iterate:
- receiving a current frame of display data,
- storing the current frame of display data in the second frame buffer,
- comparing values of corresponding picture elements in said first frame buffer and said second frame buffer, the comparison providing indicators of row and column positions representing at least one rectangular area within which area at least one picture element value differs between the first frame buffer and the second frame buffer,
- providing the positions of the at least one rectangular area and the corresponding picture element values of the second frame buffer to the display system, and
- assigning the display data in the second frame buffer to the first frame buffer.

7. A computer program product comprising software instructions that, when executed in a processor, performs the method of claim 6.
